# EUROPEAN PATENT APPLICATION

(11) **EP 2 575 055 A1**
(43) Date of publication of application: **03.04.2013**
(21) Application number: 11306251.7
(22) Date of filing: 29.09.2011
(51) Int. Cl.: G06F 17/30, G06F 17/20, G06Q 10/00

(54) **Enhanced tag cloud**

(71) Applicant: France Télécom, 75015 Paris (FR)
(72) Inventor: Reix, Fabrice, LONDRES, TW92EE (GB); De Belgeonne, Rudy, LONDRES, W60RA (GB); Hegab, Ashraf Samy, LONDRES, SE15 6QX (GB)
(74) Representative: Cabinet Plasseraud

(57) **Abstract**

The invention concerns a method for displaying data on a graphical interface (3) of a display device (1), each word from a plurality of words being associated with a number of occurrences of the word. The method comprises defining a first representation for each word of the plurality of words, the first representation being displayed on the graphical interface with a size depending on the number of occurrences of the word. The method further comprises associating with each word a given portion of the graphical interface and displaying, in the portion associated with a given word, a number of second representations of the given word, the number depending on the number of occurrences associated with the given word.

## Description

The present invention generally relates to data processing for cloud tag visualisation.

It finds applications, in particular while not exclusively, in personal computers, laptops, mobile phones such as Smartphones, Personal Digital Assistants (PDAs) and large screen display devices.

Tag clouds are a popular way to represent data by assigning weights to tags, each weight depending on the popularity of its assigned tag. For example, users of a given group can be polled for different opinions or moods so that they can choose one word among a predefined plurality of words. Each time a word is chosen by a user, its popularity is increased (for example, a counter can be incremented).

Then, the words that are the most popular (meaning that have been the most often been chosen) can be displayed in a tag cloud with a bigger size than the size of words that are less popular.

However, tag cloud is a static tool to render information about the popularity of words and is not adapted to dynamic inputs, i.e. when popularities of the words keep on changing each time one or ore of the polled users change their opinions.

To address these needs, a first aspect of the invention relates to a method for displaying a could tag from a plurality of words on a graphical interface of a display device, each word from the plurality of words being associated with a number of occurrences of the word, the method comprising:
- defming a first representation for each word of the plurality of words, the first representation being displayed on the graphical interface with a size depending on the number of occurrences of the word;
the method further comprising:
- associating with each word a given portion of the graphical interface; and
- displaying, in the portion associated with a given word, a number of second representations of the given word, the number depending on the number of occurrences associated with the given word.

Thus, the present invention enables to give an additional emphasis to the representation of data, and in particular of cloud tags. Indeed, it enables to display, in addition to a first representation, which can be displayed as classical cloud tag, a number of second representations being representative of the number of occurrences of the word, i.e. its popularity. In the systems according to the prior art, one can observe that a given tag (or word) is bigger than another tag, but one cannot access to meta-information about the constituent parts of the tag. The present invention thus allows enhancing the representation of such tags by showing the characteristics of its constituent parts. An extra dimension of information to a data visualisation is therefore provided by the invention.

According to some embodiments of the invention, the method further comprises:
- receiving control data to decrease of a first value the number of occurrences associated with a first word and to increase of the first value the number of occurrences associated with a second word; and
- moving a subgroup of second representations from the portion associated with the first word to the portion associated with the second word, the subgroup comprising a number of second representations depending on the first value.

These embodiments enable to adapt the representations to dynamic inputs. Indeed, a number of second representations is representative of the number of occurrences, if a vote or a choice is changed by a user or several users, the second representations, initially affected to a first word, can be displaced toward the portion of the new choice or vote (second word) of the users.

In complement, each second representation can be associated with a user from a plurality of users, each user being mapped by a server on the word associated with the portion currently containing the second representation associated with the user, a first user being initially mapped on the first word, the display unit can be adapted to poll the server, and if, when polling the server, an update has been performed by the server by mapping the first user on the second word, the update being associated with the first user, then the first value can be equal to one, and the subgroup can comprise the second representation associated with the first user.

Thus, these embodiments enable to display a dynamic representation for each user and to move the second representation associated with a user upon selection by this user of a new word for example. According to some embodiments, each word can correspond to a mood (stressed, excited, happy, etc) and the users can be employees of a given firm. Thus, the employees can update their moods on the server depending on their current mood and the second representations of the employees can be moved in consequence. The visualisation of the mood state of the employees can thus be enhanced and used by a human resource service of the firm for example.

Alternatively or in complement, the server can store the date of the update associated with the first user and a size of the second representation on the graphical interface can be inversely proportional to duration since the date of the update associated with the first user.

This enables to enhance the relevance of information as the most recent updated tags are displayed in an accentuated way, whereas older tags are displayed in the background or with a smaller size. The diminution of size of the second representation of a user can be progressive and inversely proportional to duration since the last update of this user.

Alternatively, when moving the second representation of the first user to the portion associated with the second word, a timer can be initialized to zero and a size of the second representation of the first user on the graphical interface can be increased while the timer is below a given threshold.

This embodiment is an alternative way to enhance the relevance of information.

According to some embodiments of the invention, the method can further comprise decreasing by the first value the number of occurrences associated with the first word, increasing by the first value the number of occurrences associated with the second word, and updating the size of the first representation of the first word and the size of the first representation of the second word.

This enables to also update the first representation of a word depending on the dynamic inputs. Thus, the size of a word can be changed each time a second representation leaves or enters the portion corresponding to the word (first representation).

In some embodiments, each time the server performs an update, the server stores a current snapshot of the mapping between each user and the word associated with the portion currently containing the second representation associated with the user.

This enables the server to have historic capability by providing snapshots from the past and thus enables the display device to display historic view for the last week or last month for example, by polling the server.

According to some embodiments of the invention, the method can further comprise associating at least one word with a preset motion and animating the second representations of the word using the preset motion associated with the word.

Thus, second representations can have characteristics derived from a concept that the portion, in which they are currently contained, represents (for example movement, colour).

In complement, each present motion can be defined by at least one of the following parameters:
- acceleration;
- deceleration;
- turning speed;
- maximum speed; or
- minimum speed.

This enables to define the second representation motion based on predefined parameters that can be adapted depending on the word that is associated with the portion currently containing the second representation. For example, the motion representing the mood "excited" can have a greater acceleration than the motion representing the mood "fatigued".

A second aspect of the invention concerns a computer program product recorded on a storage medium and executable by a computer in the form of a software agent including at least one software module setup to implement the method according to any one of the embodiments of the first aspect of the invention.

A third aspect of the invention relates to a display device for displaying a cloud tag from a plurality of words on a graphical interface of the display device, each word from the plurality of words being associated with a number of occurrences of the word, the display device comprising:
- a definition unit for defining a first representation for each word of the plurality of words, the graphical interface being adapted to display the first representation with a size depending on the number of occurrences of the word;
the display device further comprising:
- an association unit for associating with each word a given portion of the graphical user interface; and
the graphical interface being adapted to display, in the portion associated with a given word, a number of second representations of the given word, the number depending on the number of occurrences associated with the given word.

A system for displaying a cloud tag from a plurality of words on a graphical interface of a display device of the system, the system further comprising a server storing each word from the plurality of words in association with a number of occurrences of the word, the display device comprising:
- a definition unit for defining a first representation for each word of the plurality of words, the graphical interface being adapted to display the first representation with a size depending on the number of occurrences of the word;
the display device further comprising:
- an association unit for associating with each word a given portion of the graphical interface; and
the graphical interface being adapted to display, in the portion associated with a given word, a number of second representations of the given word, the number depending on the number of occurrences associated with the given word.

The present invention is illustrated by way of example, and not by way of limitation, in the Figures of the accompanying drawings, in which like reference numerals refer to similar elements and in which:
- Figure 1 represents system according to some embodiments of the invention;
- Figure 2.1 and 2.2 represents a screen of a display device according to some embodiments of the invention, in two different configurations;
- Figure 3 represents a flowchart representing the steps of a method according to some embodiments of the invention;

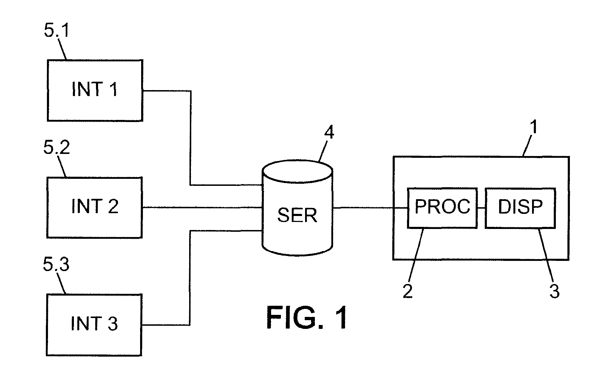

Referring to Figure 1, there is shown a system according to some embodiments of the invention.

The system comprises a display device 1 comprising a processor 2 and a graphical interface such as a screen 3 for example. The system further comprises a server 4, a first terminal interface 5.1, a second terminal interface 5.2 and a third terminal interface 5.3.

For example, the first terminal interface 5.1 can be a desktop interface (such as a desktop computer for example), the second terminal interface 5.2 can be a mobile interface (such as a mobile phone, a Smartphone, a laptop or a PDA for example), and the second terminal interface 5.3 can be any other type of interface (e.g. point of display). The server 4 can be a web server for example.

The interfaces 5.1-5.3 can access the server 4 via any means (via Wi-Fi or via a wired connection for example) in order to choose a tag among a plurality of tags that are proposed by the server. In what follows, one can consider that the plurality of tags comprises several moods and the present invention can be used to display a global view of the moods of employees of a given firm for example. The interfaces 5.1-5.3 can then be used by the employees to update their current mood. However, no restriction is attached to the context of the invention, which can also be used to generate cloud tags illustrating popularity of any tags (or words). For example, the present invention can also be used to illustrate the popularity of people, trademarks, activities etc.

From the mobile interfaces 5.1-5.3, the employees can select a mood among a plurality of moods, which can be comprised in the following list for example: "excited", "happy", "contented", "chilled", "fatigued", "depressed", "upset" and "stressed". No restriction is attached to the way the employees selects the mood on the interfaces 5.1-5.3. For example, they can use a browser-based interface on the desktop computer 5.1 or on the mobile phone 5.2, as the present invention can be implemented on Android^{™}, iPhone^{™}, iPad^{™} or Symbian^{™}. The employees can also select a mood via Near Field Communication (NFC) on device interface 5.3, which allows them to input their mood at the point of display by holding their device up to a menu of sensors. The present invention can also be attached to a Microsoft^{™} Kinect^{™} controller and gesture of the employees can be used to deduce and input their mood. Other input techniques can be considered, such as facial recognition, haptic feedback, cognitive sensors and thermal liquid sensors for example.

Upon selection of a mood by an employee, a mood value can be transmitted to the server 4 with an identifier of the user (employee). By receiving the identifier of the user, the server 4 is adapted to determine if the selected mood is a first selection or is an update of a previous selection. By default, one can consider in what follows that the mood selection is an update.

The server 4 can then record the updated mood per user and can also store the time at which the update has been received. To this purpose, each employee, at a given time, can be mapped on a given mood. The server 4 can then extract a snapshot of the moods of all employees who have already selected a mood. The snapshots are made available to the display device 1. The server 4 is also adapted to append to the snapshot a range of data from external feeds, which can include local weather, lab events or world events for example.

The identifiers of the employees of a same firm can be grouped in the server 4, so that the server 4 can be used for several firms for example. The identifiers of the employees can also be grouped according to their service. For example, technicians can belong to a group, engineers to an other group, etc.

The display device 1, which can be located on client side, such as for example a member of the human resource of a firm, can poll the server 4 for the moods of the employees of a given group. To this purpose, the display device can for example poll the server at constant intervals of five seconds. Each time an update has been performed in the server 4, an algorithm according to the invention can be implemented in the processor 2 to detect mood change of an employee. Each employee can then be represented by a given representation (second representation as it will be further discussed), which can be a particle on the screen 3, gravitating around its currently associated mood (first representation). As it will be further explained, each particle (corresponding to an employee) is given a range of behaviours, which can reflect the current selected mood.

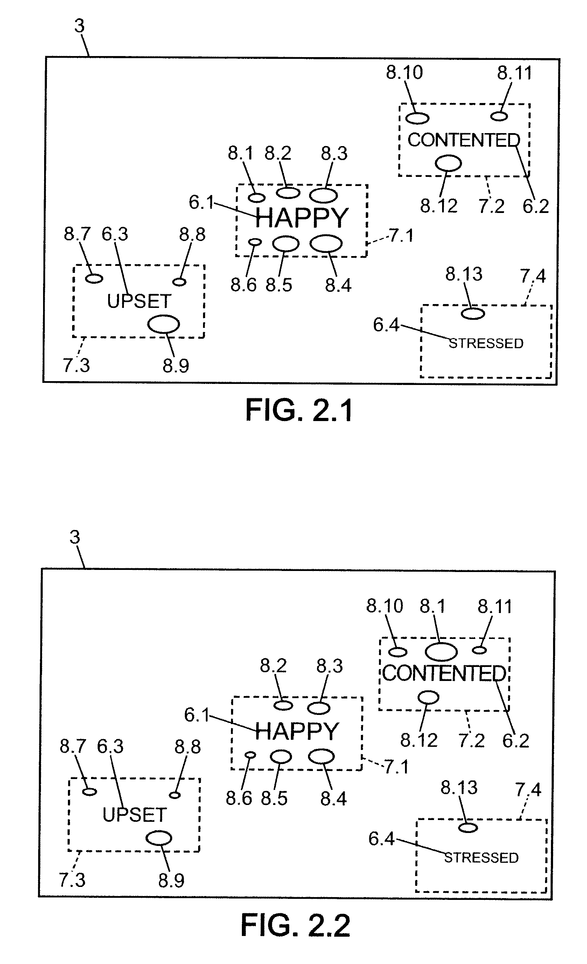

Referring now to Figures 2.1 and 2.2, there is shown the screen 3 of the display device 1 according to some embodiments of the invention, in two different configurations.

In what follows, one can consider a reduced list of moods that comprises happy, contented, stressed and upset. No restriction is attached to the moods that are selected. Each mood is displayed on screen 3 with a first representation that can consist in written characters "HAPPY" 6.1, "CONTENTED" 6.2, STRESSED" 6.4 and "UPSET" 6.3. Portions of the screen are associated to the first representations of the moods. For example, a portion 7.1 is associated with the first representation "HAPPY" 6.1, a portion 7.2 is associated with the first representation "CONTENTED" 6.2, a portion 7.3 is associated with the first representation "UPSET" 6.3 and a portion 7.4 is associated with the first representation "STRESSED" 6.4.

Each first representation 6.1-6.4 of a mood is displayed with a given size, which can depend on the number of occurrences of the mood, i.e. the number of current selections of each mood by the employees. In this example, one can consider thirteen employees of a same group. Each employee is represented by a particle 8.1-8.13 (second representation). Each particle is located in the portion of the mood currently selected by the employee associated with the particle.

For example, the first representations of the moods can be represented by flowers that open or close depending on their current popularity, while the second representations of the moods can be bees gravitating around the flowers according to motions that will be defined hereafter. This enables to improve the visual appeal of the present invention and thus to encourage the users to participate over a long period of time.

In a first configuration (Figure 2.1), particles 8.1-8.6 are located in the portion 7.1, which means that the six employees which are represented by the particles 8.1-8.6 are currently "happy" and have selected this mood. Particles 8.7-8.9 are located in the portion 7.3, particles 8.10-8.12 are located in the portion 7.2 and the particle 8.13 is located in the portion 7.4. Each particle can have a given size, which depends on duration since the last mood update of the employee corresponding to this particle, for example.

The position of the portion associated with each first representation of a mood can also depend on the number of occurrences of the mood. For example, the most popular mood (most selected mood) can be displayed in the centre on the screen 3, whereas the least popular mood can be displayed in a peripheral area of the screen 3.

Thus, as the first representation "HAPPY" contains six particles, meaning that the mood "happy" is currently selected by six employees and is the most popular mood, it is displayed in the centre of the screen 3 with the biggest characters.

In a second configuration (Figure 2.2), the display device 1 polls the server to obtain a list of current mood values for the group of employees represented by particles 8.1 to 8.13. Current mood values for the group can be considered as control data, based on which the processor 2 is adapted to update the configuration displayed on the screen 3. In this example, the employee represented by particle 8.1 has updated his current mood and has selected the mood "contented". The update has been performed in the mapping of the server 4 and has been detected by the processor 2, which is adapted to move the particle 8.1 from the portion 7.1 to the portion 7.2 (which is associated with the current mood of the employee represented by particle 8.1). As the number of occurrences of the mood "happy" has been decreased by one, the size of the characters of the first representation "HAPPY" 6.1 is reduced. As the number of occurrences of the mood "contented" has been increased by one, the size of the characters of the first representation "CONTENTED" 6.2 is increased. The portion 7.2 is also displaced near to the centre of the screen as "contented" is the second most popular mood. As it can be observed, the size of the particle 8.11 has been increased as it is the most recent update. All the sizes of the other particles have been reduced as the duration since the last mood updates has been increased for them (no mood update between the first configuration of Figure 2.1 and the second configuration of Figure 2.2).

According to some other embodiments, the size of the particles 8.1-8.13 can be increased during a predefined period after they have been moved to another portion (mood update). To this end, the display device 1 can further comprise a counter, which is initialized to zero when at least one new update has been detected by the processor 2, and the particles which has been moved by the processor 2 in response to the update can be sized up while the counter is below a given threshold.

In addition, for each mood, a set of parameters can be defined, which can control the motion of its constituent particles (the particles that are contained in its portion). The parameters can include acceleration, deceleration, turning speed, maximum speed and minimum speed for example. A colour can also be associated with each mood, which is represented by a colour value coded in hexadecimal or Red Green Blue (RGB). Table 1 illustrates an example of associations between mood, colour and motion of the particles, which is based on psychological principles.

**Table 1**

| **Mood** | **Colour** | **colour value** | **Motion** |
|---|---|---|---|
| Excited | Dark Orange | hexadecimal fd752a | medium-fast forward speed, fast rotation speed (long straight lines, with narrow turning circle) acceleration and deceleration at the beginning and end of each straight |
| | | RGB | |
| | | 1.0, 0.4, 0.2 | |
| Happy | Pale Orange | hexadecimal fb9f3b | medium forward speed, slow rotation (gliding motion) |
| | | RGB | |
| | | 1.0,0.6,0.2 | |
| Contented | Yellow | hexadecimal fdc82a | same as Happy, but slower - no acceleration or deceleration |
| | | RGB | |
| | | 1.0,0.8,0.2 | |
| Calm | Pale Blue | hexadecimal cee3fe | similar to Contented, but even slower |
| | | RGB | |
| | | 1.0,1.0,0.8 | |
| Fatigued | Beige | hexadecimal Ddcbb9 | same as Excited, but much slower-pause before change of direction |
| | | RGB | |
| | | 0.8,0.8,0.6 | |
| Depressed | Deep Purple | hexadecimal 4e21a6 | either static or very slow movement (like happy) |
| | | RGB | |
| | | 0.8,0.4,0.2 | |
| Upset | Mid Blue | hexadecimal 288afa | medium-slow forward speed, fast rotation speed (short straight lines) |
| | | RGB | |
| | | 0.2, 0.6, 1.0 | |
| Stressed | Red | hexadecimal fd2a31 | similar to Upset but much faster |
| | | RGB | |
| | | 1.0,0,0 | |

Then, when an employee updates its mood by selecting a new current mood, the parameter of the particle representing the employee is modulated toward the new mood and the control of the particle is passed to the portion of the new mood. The particle will then move in the portion of the new mood.

A system composed of a first representation of a mood and of its associated portion is called mood system in what follows. Mood systems can be positioned via a circle function with the parameters tweaked depending on the size of the biggest mood system (which depends on the current number of occurrences of the mood as already explained) and a current mood system being positioned. For example, the following algorithm can be implemented in the processor 2:
// First find the mood system with the most particles (most popular mood) var biggestMoodSystem = moodSystems.findBiggest();
// Direct the biggest mood system to the centre of the screen, the centre being associated with coordinates (0,0), the first coordinate being horizontal on the screen 3 and the second coordinate being vertical on screen 3.
   biggestMoodSystem.x = 0;
   biggestMoodSystem.y = 0;
for remaining mood systems
   var radius = biggestMoodSystem.radius + currentMoodSystem.radius * 1.4;
   currentMoodSystem.x = radius * sin();
   currentMoodSystem.y = radius * cos();
*ll Circle function*
   sin θ = sin (0 + 2π*k*),
   cos θ = cos (θ + 2π*k*),

The particles 8.1-8.13 can then be positioned about a mood system depending on the number of particles that the mood system contains. For example, the following algorithm can be implemented in the processor 2:
var radius = (particles.length * 0.25) < 10 ? radius : 10;
x = random * radius + position.x;
y = random * radius + position.y;

z = random * radius + position.z;

The particles 8.1-8.13 and the mood systems can move based on the same particle motion, with their properties coming from an xml template file generated by a designer for example.

The particles velocity can be based on its rotation about an x axis and a y axis (which can be defined as horizontal and vertical on the screen 3, respectively) along with its current speed. The velocity can then be added to the particles position. For example, the following algorithm can be implemented in the processor 2:
velocity.x = sin(rotation.y) * speed;
velocity.y = cos(rotation.x) * speed;
velocity.z = cos(rotation.y) * speed;
   position += velocity.

The way a particle reached its speed and rotation can be interpolated by the particles properties per mood.

```
// Controls X/Z direction
 var targetRotationY = AngleTowards(position.x, positionTarget);
 ToRotation(rotation.y, targetRotationY, property.rotationSpeed * gameTime.delta);
 // Controls Y direction
 var targetRotationX = AngleTowards(position.z, positionTarget);
 ToRotation(rotation.x, targetRotationX, property.rotationSpeed * gameTime.delta);
 var rotationDistance = (DistanceBetweenAngles(rotation.y, targetRotationY) +
 DistanceBetweenAngles(rotation.x, targetRotationX)) * 0.5;
 if(rotationDistance <= property.movementRotationAngle)
 {
 ToTarget(movementSpeed, property.movementMaxSpeed,
 property.movementAcceleration * gameTime.delta);
 }
 else
 {
 ToTarget(&movementSpeed, property.movementMinSpeed,
 property.movementDeceleration * gameTime.delta);
     }
```

The particle parameters can be grouped in the following structure: struct ParticleProperty

```
{
 float movementMaxSpeed;
 float movementMinSpeed;
 float movementAcceleration;
 float movementDeceleration;
 float movementRotationAngle;
 float rotationSpeed;
 Colour colour;
     };
```

Then, a set of parameters for a particle can be described within an xml descriptor file as following:

```
<mood name="happy"
 x="0.75" y="0.5"
 r="1.0" g="0.6" b="0.2" a="0.25">
 <system movementMaxSpeed="20.0" movementMinSpeed="1.0"
 movementAcceleration="40.0" movementDeceleration="30.0"
 movementRotationAngle="1.0" rotationSpeed=" 180.0" />
 <particles movementMaxSpeed="16.0" movementMinSpeed=" 10.0"
       movementAcceleration=" 10.0" movementDeceleration="10.0"
       movementRotationAngle=" 145.0" rotationSpeed="500.0" />
       </mood>
```

Thus, an employee can send a request containing a current mood and an identifier of the employee to the server 4 via one of the device interfaces 5.1-5.3, which can be written as following : (user_id=4, mood_value=7). The server 4 can store the current mood (a mood value for example) and the time of the update. In addition, the device interface 5.1-5.3 can send keywords for example, that can be stored by the server 4.

The server 4 can also provide a current snapshot of the moods of a given group of employees. The snapshot can consist of a set of user moods, comprising the mood value, the update time and the keywords. The snapshot can further comprise additional information relating to the current environment (weather, world events, lab events).

A snapshot can be storing the following data:

```
<snapshot>
     <info>
     <group>chiswick</group>
     <time>2011-08-17 10:08:38 +0100</time>
     <weather>white cloud</weather> >
  </info>
  <person id="1" mood_value="8" last-update-time=" 164351 "/> <person id="2"
  mood_value="4" last_update_time="77950" keyword="Hello Friday! "/> ...
```

The server 4 can then provide snapshots from the past to the display device 1 so that it can display historic views for the last week or the last month, for example.

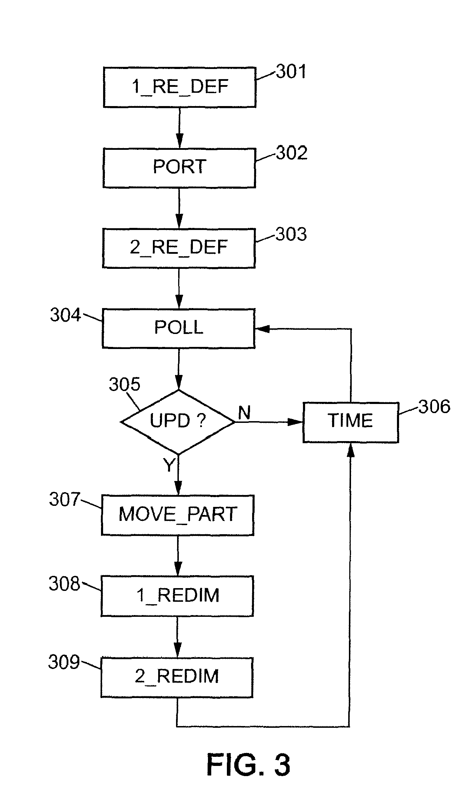

Referring now to Figure 3, there is shown a flowchart representing the steps of a method according to some embodiments of the invention. The method can be implemented in the processor 2 of the display device 1.

At step 301, the processor 2 can define, based on a mapping performed by the server 4 between tags (moods, trademarks, people) and users (employees, voters), a first representation for each tag that is defined in the server 4. The first representation can be the first representations 6.1-6.4 illustrated on Figures 2.1 and 2.2. However, the first representations 6.1-6.4 can be any representations (symbols or drawings for example) that can be representative of a mood (or a trademark, person etc). Based on the number of occurrences of the tag, a size is determined for each first representation.

At step 302, the processor 2 can define portions 7.1-7.4 of the screen 3 to be associated with the first representations 6.1-6.4.

At step 303, the processor 2 can define a number of second representations for each tag, the number of second representations depending on the number of occurrences of each tag. The second representations (particles 8.1-8.13 for example) can then be displayed in the portions 7.1-7.4. According to some embodiments, each second representation corresponds to a user (employee, voter) having selected a given tag. The second representation is then displayed in the portion of the corresponding tag and can be animated by a motion, which depends on the tag, as it has been previously explained.

At step 304, the processor 2 can poll the server 4 to read the mapping. If the processor detects at a step 305 that no update has been performed in the server 2, then the processor waits at step 306 (during a predetermined period of time, five seconds for example), and polls the server again at step 305.

If it has been detected at step 305 that an update has been performed in the server 4, the processor 2 can move at step 307 the particles of the users, for which an update has been performed, in the portions of the tag(s) newly selected by the users.

At step 308, the processor 2 can then update the number of occurrences of each tag based on the updates and can resize the first representations of the tags in consequence.

At step 309, the processor 2 can resize each second representation based on the size of its last update, as it has been previously explained. Then, the processor 2 waits at step 306 before polling the server 4 again.

Thus, the present invention enables in particular to create a better working environment by generating creative data visualisation of multiple parameters and to encourage participation of employees through gamification both of the input capture (mood selection) and of the visualisation process. For example gamification can include the application of goals, progression, social sharing, feedback etc.

## Claims

1. A method for displaying a cloud tag from a plurality of words on a graphical interface (3) of a display device (1), wherein each word from the plurality of words is associated with a number of occurrences of said word, the method comprising:
- defining a first representation (6.1-6.4) for each word of the plurality of words, said first representation being displayed on the graphical interface with a size depending on the number of occurrences of said word;
wherein the method further comprises:
- associating with each word a given portion (7.1-7.4) of the graphical interface; and
- displaying, in the portion associated with a given word, a number of second representations (8.1-8.13) of said given word, said number depending on the number of occurrences associated with the given word.

2. The method according to claim 1, wherein the method further comprises:
- receiving control data to decrease of a first value the number of occurrences associated with a first word and to increase of said first value the number of occurrences associated with a second word; and
- moving a subgroup of second representations (8.1-8.13) from the portion (7.1-7.4) associated with the first word to the portion associated with the second word, the subgroup comprising a number of second representations depending on the first value.

3. The method according to claim 2, wherein each second representation (8.1-8.13) is associated with a user from a plurality of users, each user being mapped by a server (4) on the word associated with the portion (7.1-7.4) currently containing the second representation associated with said user, a first user being initially mapped on the first word, wherein the display unit (1) is adapted to poll the server, and wherein if, when polling the server, an update has been performed by the server by mapping the first user on the second word, said update being associated with said first user, then the first value is equal to one, and the subgroup comprises the second representation associated with the first user.

4. The method according to 3, wherein the server (4) stores the date of the update associated with the first user and wherein a size of the second representation on the graphical interface (3) is inversely proportional to duration since the date of the update associated with the first user.

5. The method according to anyone of claims 2 or 3, wherein when moving the second representation (8.1-8.13) of the first user to the portion (7.1-7.4) associated with the second word, a timer is initialized to zero and wherein a size of the second representation of the first user on the graphical interface (3) is increased while the timer is below a given threshold.

6. The method according to anyone of claims 2 to 5, wherein the method further comprises decreasing by the first value the number of occurrences associated with the first word, increasing by the first value the number of occurrences associated with the second word, and updating the size of the first representation (6.1-6.4) of the first word and the size of the first representation of the second word.

7. The method according to claim 3 or 4, wherein each time the server (4) performs an update, the server stores a current snapshot of the mapping between each user and the word associated with the portion (7.1-7.4) currently containing the second representation (8.1-8.13) associated with said user.

8. The method according to anyone of the preceding claims, wherein the method further comprises associating at least one word with a preset motion and animating the second representations (8.1-8.13) of said word using the preset motion associated with said word.

9. The method according to claim 8, wherein each present motion is defined by at least one of the following parameters:
- acceleration;
- deceleration;
- turning speed;
- maximum speed; or
- minimum speed.

10. Computer program product recorded on a storage medium and executable by a computer in the form of a software agent including at least one software module setup to implement the method according to any one of claims 1 to 9.

11. A display device for displaying a cloud tag from a plurality of words on a graphical interface (3) of said display device (1), wherein each word from the plurality of words is associated with a number of occurrences of said word, the display device comprising:
- a definition unit (2) for defining a first representation (6.1-6.4) for each word of the plurality of words, the graphical interface being adapted to display the first representation with a size depending on the number of occurrences of said word;
wherein the display device further comprises:
- an association unit (2) for associating with each word a given portion (7.1-7.4) of the graphical interface; and
wherein the graphical interface is adapted to display, in the portion associated with a given word, a number of second representations (8.1-8.13) of said given word, said number depending on the number of occurrences associated with the given word.

12. A system for displaying a cloud tag from a plurality of words on a graphical interface (3) of a display device (1) of said system, the system further comprising a server (4) storing each word from the plurality of words in association with a number of occurrences of said word, the display device comprising:
- a definition unit (2) for defining a first representation (6.1-6.4) for each word of the plurality of words, the graphical interface being adapted to display the first representation with a size depending on the number of occurrences of said word;
wherein the display device further comprises:
- an association unit (2) for associating with each word a given portion (7.1-7.4) of the graphical user interface; and
wherein the graphical interface is adapted to display, in the portion associated with a given word, a number of second representations (8.1-8.13) of said given word, said number depending on the number of occurrences associated with the given word.
